# EUROPÄISCHE PATENTSCHRIFT

(11) **EP 4 115 400 B1**
(45) Veröffentlichungstag und Bekanntmachung des Hinweises auf die Patenterteilung: **21.01.2026**
(21) Anmeldenummer: 21711210.1
(22) Anmeldetag: 08.03.2021
(51) Int. Cl.: G07F 7/06, G07F 17/10, B62B 3/14, E05B 47/00, E05B 17/00

(54) **PFANDSCHLOSSSYSTEM UND VERFAHREN ZUM BETRIEB EINES PFANDSCHLOSSSYSTEMS FÜR EINEN ENTLEIHUNGSGEGENSTAND**
DEPOSIT-OPERATED LOCK SYSTEM AND METHOD FOR OPERATING A DEPOSIT-OPERATED LOCK SYSTEM FOR A BORROWED OBJECT
SYSTÈME DE SERRURE À CONSIGNE ET PROCÉDÉ DE FONCTIONNEMENT D'UN SYSTÈME DE SERRURE À CONSIGNE POUR UN OBJET EMPRUNTÉ

(30) Priorität: 06.03.2020 DE 102020106211
(43) Veröffentlichungstag der Anmeldung: 11.01.2023
(73) Patentinhaber: Wieth, Franz, 82178 Puchheim (DE); Filosi, Andreas, 82178 Puchheim (DE)
(72) Erfinder: Wieth, Franz, 82178 Puchheim (DE); Filosi, Andreas, 82178 Puchheim (DE)
(74) Vertreter: Braun-Dullaeus Pannen Emmerling Patent- & Rechtsanwaltspartnerschaft mbB
(86) Internationale Anmeldenummer: PCT/EP2021/055820
(87) Internationale Veröffentlichungsnummer: WO 2021/176105

(56) Entgegenhaltungen:
- CN-A- 108 824 997
- DE-A1- 102018 108 116
- DE-U1- 202018 003 172

## Beschreibung

Die Erfindung betrifft ein Verfahren zum Betrieb eines Pfandschlosssystems für einen Entleihungsgegenstand, insbesondere für einen von Hand bewegbaren Transportwagen, wobei ein Blockadeelement des Pfandschlosses in einer Halteposition den Schlüssel im Pfandschloss gegen Entnahme sichert und in einer Freigabeposition den Schlüssel freigibt, wobei ein Sperrelement in einer Sperrposition ein Verstellen des Blockadeelements aus seiner Halteposition in seine Freigabeposition blockiert und in einer Entsperrposition das Verstellen des Blockadeelements in seine Freigabeposition freigibt, wobei ein Stellglied durch die Eingabe einer Pfandmarke in das Pfandschloss, rein mechanisch und unabhänig von einem elektrischen Antrieb, von einer ersten Position in eine zweite Position bewegt wird, wobei das Stellglied bei der Bewegung von der ersten in die zweite Position das Sperrelement von seiner Sperrposition in seine Entsperrposition verstellt, wobei ein Rückstellen des Sperrelements in seine Sperrposition und des Stellglieds in seine erste Position von dem Blockadeelement blockiert wird, wenn es sich in der Freigabeposition befindet.

Darüber hinaus betrifft die Erfindung ein Pfandschlosssystem für einen Entleihungsgegenstand, insbesondere zum Durchführen eines erfindungsgemäßen Verfahrens, aufweisend eine Pfandmarke, ein Pfandschloss und einen Schlüssel, wobei eine Freigabe des in dem Pfandschloss gehaltenen Schlüssels gegen Eingabe der Pfandmarke in das Pfandschloss erfolgt, wobei ein Blockadeelement im Pfandschloss verstellbar gelagert ist, so dass es zwischen einer Halteposition, in der es den Schlüssel im Pfandschloss gegen Entnahme sichert und einer Freigabeposition, in der es den Schlüssel freigibt, verstellbar ist, wobei ein Sperrelement zwischen einer Sperrposition, in der es das Blockadeelement in seiner Halteposition hält und einer Entsperrposition, in der es das Blockadeelement freigibt, verstellbar gelagert ist, wobei das Pfandschloss zumindest ein Stellglied aufweist, das durch die Eingabe der Pfandmarke in das Pfandschloss von einer ersten Position in eine zweite Position versetzbar ist, wobei das Stellglied eine Kontaktfläche für das Sperrelement aufweist, so dass eine Bewegung des Stellglieds von seiner ersten in die zweite Position das Sperrelement von seiner Sperrposition in seine Entsperrposition verstellt, wobei das in der Freigabeposition befindliche Blockadeelement den Weg des Sperrelements in seine Sperrposition und den Weg des Stellglieds in seine erste Position blockiert.

Pfandschlosssysteme werden seit längerem beispielsweise im Groß- und Einzelhandel eingesetzt. Sie werden dort genutzt, um Einkaufswagen in einer Einkaufswagengarage sammeln und mittels des Pfandschlosssystems zusammenschließen zu können. Die bekannten Pfandschlösser werden von Hand bedient, sie funktionieren rein mechanisch. Das Lösen eines im Pfandschloss gehaltenen Schlüssels wird durch das Einschieben einer Pfandmünze respektive Pfandmarke in das Pfandschloss bewirkt. Damit einhergehend wird die Pfandmünze im Pfandschloss gegen Entnahme gesichert. Ein Einschieben eines passenden Schlüssels in das Pfandschloss gibt die Pfandmünze wieder frei, wobei der Schlüssel im Pfandschloss erneut arretiert wird. Ein derartiges Pfandschloss wird von der EP 1 035 523 A2 gezeigt.

Aus dem DE 20 2018 003172 U1 ist ein Pfandschloss bekannt, welches mittels Pfandmünze sowie elektrisch bedient werden kann. Dabei wird die Freigabe des Pfandschlüssels bei beiden Varianten elektrisch ausgelöst.

Das CN 108 824 997 A offenbart ein hybrides Pfandschloss, dass den Pfandschlüssel mechanisch freigibt und wieder arretiert. Mittels der Bewegung eines Elektromotors kann die mechanische Freigabe des Pfandschlüssels verhindert werden.

Diese Erfindung stellt sich die Aufgabe, ein Verfahren und ein Pfandschlosssystem vorzuschlagen, bei dem das Pfandschloss nicht nur von Hand bedienbar ist, sondern zusätzlich auch elektrisch bzw. elektronisch ausgelöst werden kann.

Diese Aufgabe wird gelöst von einem Verfahren gemäß Anspruch 1 und einem Pfandschlosssystem gemäß Anspruch 6. Einige bevorzugte Ausführungsformen des Verfahrens bzw. des Systems werden mit den abhängigen Ansprüchen gefasst.

Ein Grundgedanke der Erfindung ist es, dass die Freigabe des in dem Pfandschloss gehaltenen Schlüssels auch erfolgt, wenn ein elektrischer Antrieb einen Schlitten bewegt, welcher in einer Ausgangsposition am Sperrelement verschieblich gelagert ist, wobei in einem ersten Bewegungsschritt des Schlittens der Schlitten das Sperrelement von seiner Sperrposition in seine Entsperrposition verstellt und in einem zweiten Bewegungsschritt des Schlittens der Schlitten wieder in seine Ausgangsposition verstellt wird, wobei während des ersten und/oder zweiten Bewegungsschrittes ein zwischen dem Schlitten und dem Sperrelement angeordnetes Federelement unter Spannung gesetzt wird, und dass das Sperrelement durch Entspannen des Federelements in seine Sperrposition bewegt wird, sobald das Blockadeelement das Rückstellen des Sperrelements in seine Sperrposition freigibt.

Das erfindungsgemäße Pfandschlosssystem zeichnet sich dadurch aus, dass ein elektrischer Antrieb mit einem Schlitten verbunden ist, welcher am Sperrelement verschieblich gelagert ist, wobei am Sperrelement ein Federelement angeordnet ist, welches unter Spannung steht, wenn das Blockadeelement den Weg des Sperrelements zurück in die Sperrposition blockiert.

Der am Sperrelement verschiebbar gelagerte Schlitten ermöglicht es, dass das Sperrelement unabhängig von der mittels Einführen einer Pfandmarke rein mechanisch induzierten Bewegung auch mittels eines elektrischen Antriebs bewegt werden kann. Der verschieblich am Sperrelement gehaltene Schlitten nimmt im ersten Bewegungsschritt das Sperrelement mit und verstellt es auf diese Weise von seiner Sperrposition in die Entsperrposition. Während des ersten Bewegungsschritts wird ein zwischen dem Sperrelement und einem ortsfest zum elektrischen Antrieb angeordneten Anschlag anliegendes Federelement gespannt. Im zweiten Bewegungsschritt wirkt der Schlitten in einer hierzu alternativen oder ergänzenden zweiten Ausführungsformüber das Federelement auf das Sperrelement ein. Wenn das Blockadeelement sich in der Freigabeposition befindet und den Rückweg des Sperrelements in seine Sperrposition blockiert, bewegt sich der Schlitten bei seinem Weg zurück in die Ausgangsposition relativ zum blockierten Sperrelement. Hierdurch wird in der zweiten Ausführungsform das zwischen Schlitten und Sperrelement angeordnete Federelement unter Spannung gesetzt. Gibt das Blockadeelement den Weg des Sperrelements frei, wird das Sperrelement in der ersten Ausführungsform durch die zwischen Sperrelement und Anschlag wirkende Federkraft und in der zweiten Ausführungsform durch die zwischen Sperrelement und Schlitten wirkende Federkraft zurück in seine Sperrposition bewegt, wobei das Federelement sich entspannt. Von besonderem Vorteil ist es dabei, wenn das Federelement in der Sperrposition des Sperrelements vorgespannt ist, so dass bei der Bewegung des Sperrelements in die Freigabeposition eine für die federinduzierte Rückstellung des Sperrelements in die Sperrposition ausreichende Federkraft aufgebaut werden kann.

Wird der Schlüssel mittels Einschub einer Pfandmarke in das Pfandschloss freigegeben, führt die Bewegung des Stellglieds von seiner ersten in seine zweite Position ebenfalls zu einer Verstellung des Sperrelements von seiner Sperrposition in seine Entsperrposition. Der verschieblich am Sperrelement gehaltene Schlitten verbleibt dabei zumindest im Wesentlichen in seiner Ausgangsposition. Hierdurch wird in der ersten Ausführungsform das zwischen dem Sperrelement und dem Anschlag angeordnete Federelement unter Spannung gesetzt in der zweiten Ausführungsform das zwischen Sperrelement und Schlitten angeordnete Federelement unter Spannung gesetzt. Entsprechend dem oben Gesagtem führt die Federkraft zum einem Rückstellen des Sperrelements in die Sperrposition, sobald das Blockadeelement den Weg wieder freigibt.

Der verschieblich am Sperrelement gehaltene Schlitten kann sich somit unabhängig von der Position des Sperrelements bewegen. Ebenso kann sich das Sperrelement unabhängig von der Position des Schlittens bewegen. Dies ermöglicht ein Pfandschlosssystem bei dem eine Freigabe des Schlüssels aus dem Pfandschloss sowohl durch Einschub einer Pfandmarke als auch durch Aktivierung eines elektrischen Antriebs erfolgten kann.

Zur Wirkweise und den Merkmalen des per Pfandmünze bedienten Pfandschlosssystems wird auf das EP 1 035 523 B1 (im Weiteren als EP 1 bezeichnet) verwiesen, dessen Merkmale und Verfahrensschritte sich diese Anmeldung mit einer Ausnahme zu eigen macht und die Teil dieser Anmeldung sind. Diese Ausnahme betrifft das Zusammenwirken zwischen dem erfindungsgemäßen Stellglied, das in der EP ebenfalls als Stellglied bezeichnet wird und dem erfindungsgemäßen Blockadeelement, dass in der EP 1 als Zwischenglied, insbesondere als Drehteil bezeichnet ist. Erfindungsgemäß wird das Blockadeelement nicht direkt sondern lediglich indirekt vom Stellglied betätigt oder freigegeben. Das Stellglied wirkt auf das Sperrelement ein und verstellt dieses.

Vorteilhafterweise wird der elektrische Antrieb von einem Sensor angesteuert, der ein drahtlos gesendetes Signal detektiert, welches die Bewegung des Elektromotors auslöst. Ein solcher Sensor kann beispielsweise ein NFC-Sensor sein, der ein per NFC gesendetes Signal eines mobilen Telekommunikations-Endgeräts, beispielsweise eines Smartphones, detektiert und daraufhin den elektrischen Antrieb auslöst. Mögliche Alternativen und/oder Ergänzungen hierzu sind der EP 3 491 602 A1 (EP 2) zu entnehmen.

Von besonderem Vorteil ist es, wenn ein elektronisches Steuerungselement des Pfandschlosses, beispielsweise eine Platine oder ein Mikrokontroller (MCU) sich prinzipiell im Standby Modus befindet und erst durch das Auflegen des mobilen Telekommunikations-Endgeräts die Kommunikation zwischen NFC respektive der Platine oder des MCU beginnt. Im Anschluss geht das elektronische Steuerelement wieder in Stand-by. Er wird also durch das Aufbauen der Kommunikation zwischen passivem NFC Tag und dem aktiven NFC des mobilen Telekommunikations-Endgeräts zeitweise aufgeweckt. Hierdurch kann ein geringer Stromverbrauch und damit eine lange Lebensdauer erreicht werden.

Der elektrische Antrieb des Schlittens kann elektromagnetisch erfolgen, also indem der Schlitten mittels eines elektromagnetischen Feldes verstellt wird. Von besonderem Vorteil ist die Ausbildung des elektrischen Antriebs als Elektromotor, welcher einfach in das Pfandschlosssystem integriert werden kann. Besonders vorteilhaft ist eine Ausbildung, bei welcher der Elektromotor ein Rotationsmotor ist und zwischen dem Elektromotor und dem Schlitten ein Exzenter angeordnet ist, so dass eine Drehbewegung des Elektromotors in eine lineare Bewegung des Schlittens umgesetzt wird. Dies ermöglicht es die Bewegung des Schlittens mittels einer 360 Grad Motordrehung darzustellen, wobei der erste Bewegungsschritt auf den ersten 180 Grad der Motordrehung und der zweite Bewegungsschritt zurück in die Ausgangsposition des Schlittens entlang der zweiten 180 Grad erfolgt. In einer hierzu alternativen Ausführungsform beträgt die Motordrehung während des ersten Bewegungsschrittes weniger als 180 Grad, insbesondere zwischen 30 und 150 Grad, vorzugsweise 110 Grad. Dies ermöglicht es, für den Schlitten einen Anschlag auszubilden, an dem er bei Beendigung des ersten Bewegungsschrittes zur Anlage kommt. Mit Hilfe des Anschlags kann das Erreichen dieser Position besser detektiert werden. Fährt der Schlitten gegen den Anschlag, wird eine weitere Bewegung des noch laufenden Motors blockiert, der hierdurch entstehende erhöhte Stromverbrauch des Motors kann als Signal für das Erreichen des Anschlags gemessen werden.

In einer hierzu alternativen Ausführungsform ist der Elektromotor ein Linearmotor, wodurch die Umwandlung der Rotationsbewegung entfallen kann. Auch bei einem Linearmotor kann die oben für den Rotationsmotor beschriebene Positionsbestimmung am Ende des ersten Bewegungsschrittes mittels eines Anschlags genutzt werden.

Detektiert ein Sensor oder mehrere Sensoren das Erreichen der Ausgangsposition des Schlittens und/oder der Entsperrposition des Sperrelements, ermöglicht dies eine exakte Ansteuerung und/oder Kontrolle des elektrischen Antriebs. Ein hierfür besonders geeigneter Sensor ist ein Hall-Sensor, welcher die Anwesenheit eines mit dem Schlitten bzw. dem Sperrelement verbundenen Magneten detektiert. Ein Hall-Sensor kann entsprechend auch dafür genutzt werden, die Anwesenheit eines Schlüssels im Pfandschloss zu detektieren. Eine weitere Einsatzmöglichkeit für einen Sensor, insbesondere einen Hall-Sensor, ist die Detektion, ob das Sperrelement in der Sperrposition angeordnet ist. Die Detektion einer bestimmten Position kann dazu genutzt werden, nicht gewollte bzw. nicht passende Positionen der jeweiligen beweglichen Elemente zu detektieren. In einem derartigen Fall kann eine entsprechende Fehlermeldung ausgegeben werden.

In einer besonders geeigneten Ausführungsform ist das Sperrelement ein Stift. Auf diesen kann ein Federelement in Form einer Schraubenfeder aufgesetzt und gehalten werden.

Ein weiterer Grundgedanke dieser Anmeldung, welcher sich insbesondere die aus dem EP 3 491 602 A1 (EP 2) bekannte Lehre zu eigen macht, diese ergänzt oder Alternativen hierzu aufzeigt, betrifft die Funktion bzw. Bedienung eines elektronischen Pfandschlosses. Das Folgende kann für das zuvor erläuterte Pfandschlosssystem wie auch für das Verfahren zum Betrieb desselben genutzt werden. Ein Bezug hierzu ist aber nicht erforderlich, das Folgende kann somit auch unabhängig vom zuvor beschriebenen Pfandschlosssystem betrachtet werden. Insofern ist das Nachfolgende nicht an das oben Gesagte gebunden.

Die Funktionen des elektronischen Pfandschlosses werden ausgehend von zwei mittels des Pfandschloss-Systems zusammengeketteten Entleihungsgegenständen beschrieben, beispielsweise einer Reihe von in einer Einkaufswagengarage eingestellten Einkaufswagen. Der Kunde aktiviert das elektronische Pfandschloss mittels Nähern oder Auflegen des mobilen Telekommunikations-Endgeräts auf einen insbesondere gekennzeichneten Bereich des Entleihungsgegenstandes, beispielsweise am Griff des Einkaufwagens. Hiermit beginnt die Kommunikation einer auf dem Telekommunikations-Endgerät laufenden App mit einem NFC-Transponder, welchen das Pfandschloss aufweist. Ein solcher NFC weist eine Seriennummer auf, über die er individualisierbar ist. Basis für die Kommunikation ist das NFC Data Exchange Format (NDEF), mit dem Kommandos an das NFC übermittelt und dessen Status ausgelesen werden kann. Der NFC des elektronischen Pfandschlosses ist über eine Steuerungseinheit insbesondere in Form einer Platine, mit Sensoren und/oder dem Motor des elektronischen Pfandschlosses verbunden. Hierüber kann er Statusmeldungen erhalten bzw. vom mobilen Telekommunikationsgerät des Kunden gesendete Signale an die Steuerungseinheit des elektronischen Pfandschlosses übermitteln.

Bei Beginn der Kommunikation zwischen App und Pfandschloss wird der NDEF-Tag ausgelesen. Dieser NDEF-Tag kann mehrere kundenbezogene Elemente wie URL-Tags, Text-Tags usw. enthalten. Eines dieser Elemente ist ein Text-Tag als Commando-Tag), umfassend mehrere Variablen, beispielsweise mit den Variablen "SXYZ". Im Beispiel steht das "S" für Status, X = "1" für das geschlossene elektronische Pfandschloss, Y = "1" wenn ein Bonus vorhanden ist und Z = "1" wenn das elektronische Pfandschloss bereit ist. Ist das elektronische Pfandschloss geöffnet, nimmt X einen anderen Wert an, beispielsweise "0", das Gleiche gilt für Y, wenn kein Bonus vorhanden ist. Ist das Pfandschloss nicht bereit, kann der Wert von Z, je nach vom Pfandschloss detektierten Fehler, variieren. Ein bestimmter Wert kann beispielsweise einen zur Neige gehenden Energiespeicher signalisieren, ein anderer Wert eine für den ordnungsgemäßen Betrieb zu geringe oder zu hohe Außentemperatur. Enthält das Commando-Tag keine Statusmeldung, sondern eine Anweisung, umfasst dieser Tag statt des S einen anderen Wert, beispielsweise C.

Um das elektronische Pfandschloss zu öffnen, sollte beim Auslesen das Commando-Tag überprüft werden, ob ein X und Z Wert vorhanden ist, welcher anzeigt, dass das Pfandschloss sowohl betriebsbereit (Z = "1") als auch geschlossen (X = "1") ist. Dann kann die App zum Öffnen des Pfandschlosses ein Commando-Tag an das elektronische Pfandschloss übertragen, welches ein Öffnungssignal umfasst.

Für die Bonusausgabe ist es dabei von Vorteil, wenn der Entleihungsgegenstand, vorzugsweise erst bei Rückgabe nach seiner Benutzung über eine gewisse Zeiteinheit, insbesondere von mindesten einer, vorzugsweise von mindestens 5 Minuten, beispielsweise bis zur erneuten Ankopplung des Einkaufswagens, für eine gewisse Zeiteinheit, beispielsweise 30 Sekunden, beim Auslesen im Commando-Tag ein Inhalt befinden, welcher den X-Wert für geschlossen und den Y-Wert für Bonus vorhanden umfasst. Nun kann zum Abrufen des Bonus ein Commando-Tag an das elektronische Pfandschloss übertragen werden, welches das Pfandschloss geschlossen hält, den Bonus durch Zurücksetzten des Y-Werts freigibt. Im gegebenen Beispiel könnte ein solches Commando-Tag also den Inhalt "C011" umfassen.

Durch die Möglichkeit, kundenbezogene Inhalte in das NFC zu speichern, kann eine auf dem mobilen Telekommunikationsgerät installierte App aufgrund dieser Informationen z.B. zwischen verschiedenen Märkten oder Ketten unterscheiden.

Weist das Pfandsystem die eingangs beschriebenen Merkmale auf, kann es durch Einschieben eines Pfandes auch manuell entsperrt werden. Der Kunde kann in diesem Fall allerdings nachher keinen Bonus abrufen.

Des Weiteren können im NFC Daten über Benutzungshäufigkeit, Stromverbrauch, Spannungsverlauf usw. gespeichert werden. Hiermit ist es möglich von einem elektronischen Pfandschloss die aktuelle Betriebszeit sowie die voraussichtliche Restlaufzeit mit einer Service-App zu ermitteln.

Der NDEF-Tag des elektronischen Pfandschlosses befindet sich beim Ausliefern vorzugsweise im gelöschten Zustand. Beim Zugriff mit der Kunden-App wird ein formatierender Commando-Tag übertragen. Nun wird das elektronische Pfandschloss mit diesem Tag formatiert, ein Überschreiben mit anderen Inhalten oder Löschen ist durch den Kunden nicht mehr möglich.

Aus der Sicht der App gibt es somit drei Situationen, 1. ein elektronisches Pfandschloss mit leerem Tag, 2. ein elektronisches Pfandschloss mit Kunden-Tag und Commando-Tag oder 3. ein elektronisches Pfandschloss mit Kunden-Tag und Commando-Tag eines anderen Kunden, z.B. eines anderen Geschäfts.

Die Reaktion der App unterscheiden sich je nach detektierter Situation: In der ersten Situation wird das Kunden-Tag und das Commando-Tag zum Formatieren übertragen. In der zweiten Situation wird das Kunden-Tag und beispielsweise zum Öffnen des elektronischen Pfandschlosses das den Inhalt "C101" umfassende Commando-Tag übertragen. In der dritten Situation erfolgt keine Aktion.

Ein Verfahren zur Bedienung des elektronischen Pfandschlosses umfasst somit vorzugsweise die folgenden Schritte. Ausgehend von einem elektronischen Pfandschloss, welches sich im geschlossenen Zustand vorzugsweise energiesparend im Standby befindet, legt ein den Entleihungsgegenstand nutzen wollender Kunde sein mobiles Telekommunikations-Endgerät auf das elektronische Pfandschloss. Im NFC-Tag des elektronischen Pfandschlosses sind die Seriennummer des NFC-Transponders, der kundenspezifische Tag und der Status des elektronischen Pfandschlosses gespeichert. Die auf dem mobilen Telekommunikations-Endgerät des Kunden geladene App kommuniziert mit dem NFC-Tag in dem sie den NFC-Tag ausliest und hierdurch die Seriennummer, den kundenspezifischen Tag und den Status des elektronischen Pfandschlosses erfährt.

Der Status des elektronischen Pfandschlosses zeigt im gegebenen Beispiel an, dass das elektronische Pfandschloss keine Fehlermeldung enthält, der Einkaufswagen mittels des elektronischen Pfandschlosses gekoppelt ist und vorzugsweise, dass kein Bonus auszugeben ist.

Damit sind die Bedingungen erfüllt, dass der Einkaufswagen entkoppelt werden kann. Hierzu kommuniziert die App mit dem NFC-Tag und überträgt das Signal zum Öffnen des elektronischen Pfandschlosses des Einkaufswagens.

Die Steuerungseinheit, insbesondere umfassend eine MCU, wacht durch die Kommunikation aus dem Standby auf und überprüft das Sendesignal. Empfängt sie das Sendesignal Öffnen, wird der Motor angesteuert, um das Schloss zu entsperren.

Bei der Rückgabe des Einkaufswagens schiebt der Kunde zum erneuten Koppeln des Einkaufswagens einen freien Schlüssel des Pfandschlosssystems in das elektronische Pfandschloss.

Durch die Betätigung des Schlüssels beim Einschieben in das Pfandschloss wird der Einkaufswagen gekoppelt und über einen Hallsensor dem System diese Aktion signalisiert und der Entsprechende Wert in den Commando-Tag geschrieben. Nun wird ein Timer von z.B. 30 Sekunden gestartet. Wird bis zum Ablauf des Timers der Bonus nicht abgerufen, so wird der Wert wieder gelöscht.

Ein Auslesen des Status erfolgt über das mobile Telekommunikations-Endgerät des Kunden. Liest der Kunde das Commando-Tag innerhalb der vom Timer vorgegebenen Zeit aus, wacht die Steuerungseinheit durch die Kommunikation aus dem Standby auf und überprüft das Sendesignal. Die App erhält die Seriennummer, den kundenspezifischer Tag und die Status-Meldung des elektronischen Pfandschlosses. Wird das Signal gesendet, wird der Bonus zurückgesetzt. Dies erfolgt, indem der Wert des Bonus im Status des NFC-Tags zurückgesetzt wird.

## Patentansprüche

1. Verfahren zum Betrieb eines Pfandschlosssystems für einen Entleihungsgegenstand, insbesondere für einen von Hand bewegbaren Transportwagen, wobei ein Blockadeelement des Pfandschlosses in einer Halteposition den Schlüssel im Pfandschloss gegen Entnahme sichert und in einer Freigabeposition den Schlüssel freigibt, wobei ein Sperrelement in einer Sperrposition ein Verstellen des Blockadeelements aus seiner Halteposition in seine Freigabeposition blockiert und in einer Entsperrposition das Verstellen des Blockadeelements in seine Freigabeposition freigibt, wobei ein Stellglied durch die Eingabe einer Pfandmarke in das Pfandschloss, rein mechanisch und unabhänig von einem elektrischen Antrieb, von einer ersten Position in eine zweite Position bewegt wird, wobei das Stellglied bei der Bewegung von der ersten in die zweite Position das Sperrelement von seiner Sperrposition in seine Entsperrposition verstellt, wobei ein Rückstellen des Sperrelements in seine Sperrposition und des Stellglieds in seine erste Position von dem Blockadeelement blockiert wird, wenn es sich in der Freigabeposition befindet,
**dadurch gekennzeichnet,**
**dass** die Freigabe des in dem Pfandschloss gehaltenen Schlüssels zum anderen erfolgt, wenn der elektrischer Antrieb einen Schlitten bewegt, welcher in einer Ausgangsposition am Sperrelement verschieblich gelagert ist, wobei in einem ersten Bewegungsschritt des Schlittens der Schlitten das Sperrelement mitnimmt und von seiner Sperrposition in seine Entsperrposition verstellt und in einem zweiten Bewegungsschritt des Schlittens der Schlitten wieder in seine Ausgangsposition verstellt wird, wobei während des zweiten Bewegungsschrittes ein zwischen dem Schlitten und dem Sperrelement angeordnetes Federelement unter Spannung gesetzt wird, wenn ein Rückstellen des Sperrelements in seine Sperrposition durch das Blockadeelement blockiert ist, und dass das Sperrelement durch Entspannen des Federelements in seine Sperrposition bewegt wird, sobald das Blockadeelement das Rückstellen des Sperrelements in seine Sperrposition freigibt und wobei der verschieblich am Sperrelement gehaltene Schlitten sich unabhängig von der Position des Sperrelements bewegen kann, und wobei sich das Sperrelement unabhängig von der Position des Schlittens bewegen kann.

2. Verfahren nach Anspruch 1,
**dadurch gekennzeichnet,**
**dass** der elektrische Antrieb von einem Sensor angesteuert wird, der ein drahtlos gesendetes Signal detektiert, welches die Bewegung des elektrischen Antriebs auslöst.

3. Verfahren nach Anspruch 1 oder 2,
**dadurch gekennzeichnet,**
**dass** ein Sensor das Erreichen der Entsperrposition des Sperrelements detektiert.

4. Verfahren nach einem der vorangegangenen Ansprüche,
**dadurch gekennzeichnet,**
**dass** ein Sensor das Erreichen der Ausgangsposition des Schlittens detektiert.

5. Verfahren nach einem der vorangegangenen Ansprüche, **dadurch gekennzeichnet,**
**dass** das Blockadeelement in seiner Freigabeposition ein Rückstellen des Stellglieds in seine erste Position verhindert.

6. Pfandschlosssystem für einen Entleihungsgegenstand, insbesondere zum Durchführen eines Verfahrens nach einem der Ansprüche 1 bis 5, aufweisend eine Pfandmarke, ein Pfandschloss und einen Schlüssel, wobei eine Freigabe des in dem Pfandschloss gehaltenen Schlüssels gegen Eingabe der Pfandmarke in das Pfandschloss erfolgt, wobei ein Blockadeelement im Pfandschloss verstellbar gelagert ist, so dass es zwischen einer Halteposition, in der es den Schlüssel im Pfandschloss gegen Entnahme sichert und einer Freigabeposition, in der es den Schlüssel freigibt, verstellbar ist, wobei ein Sperrelement zwischen einer Sperrposition, in der es das Blockadeelement in seiner Halteposition hält und einer Entsperrposition, in der es das Blockadeelement freigibt, verstellbar gelagert ist, wobei das Pfandschloss zumindest ein Stellglied aufweist, das durch die Eingabe der Pfandmarke in das Pfandschloss, rein mechanisch und unabhänig von einem elektrischen Antrieb, von einer ersten Position in eine zweite Position versetzbar ist, wobei das Stellglied eine Kontaktfläche für das Sperrelement aufweist, so dass eine Bewegung des Stellglieds von seiner ersten in die zweite Position das Sperrelement von seiner Sperrposition in seine Entsperrposition verstellt, wobei das in der Freigabeposition befindliche Blockadeelement den Weg des Sperrelements in seine Sperrposition und den Weg des Stellglieds in seine erste Position blockiert,
**dadurch gekennzeichnet,**
**dass** der elektrischer Antrieb mit einem Schlitten verbunden ist, welcher am Sperrelement verschieblich gelagert ist, wobei zwischen dem Schlitten und dem Sperrelement ein Federelement angeordnet ist, welches unter Spannung steht, wenn der Schlitten in der Ausgangsposition ist und das Blockadeelement den Weg des Sperrelements zurück in die Sperrposition blockiert.

7. Pfandschlosssystem nach Anspruch 6,
**dadurch gekennzeichnet,**
**dass** das Sperrelement ein Stift ist.

8. Pfandschlosssystem nach einem der Ansprüche 6 oder 7,
**dadurch gekennzeichnet,**
**dass** das Federelement eine Schraubenfeder ist.

9. Pfandschlosssystem nach einem der Ansprüche 6 bis 8,
**dadurch gekennzeichnet,**
**dass** der elektrische Antrieb ein Elektromotor ist.

10. Pfandschlosssystem nach Anspruch 9,
**dadurch gekennzeichnet,**
**dass** der Elektromotor ein Rotationsmotor ist und zwischen dem Elektromotor und dem Schlitten ein Exzenter angeordnet ist, so dass eine Drehbewegung des Elektromotors in eine lineare Bewegung des Schlittens umgesetzt wird.

11. Pfandschlosssystem nach Anspruch 9,
**dadurch gekennzeichnet,**
**dass** der Elektromotor ein Linearmotor ist.

## Claims

1. A method for operating a deposit lock system for a borrowed item, in particular for a manually movable transport trolley, wherein a blockade element of the deposit lock secures the key in the deposit lock against removal in a holding position, and releases the key in a release position, wherein a locking element blocks the displacement of the blockade element out of its holding position into its release position in a lock position, and releases the displacement of the blockade element into its release position in an unlock position, wherein an actuator is moved from a first position into a second position purely mechanically and independently of an electric drive by inserting a deposit token into the deposit lock, wherein the actuator displaces the locking element from its lock position into its unlock position while moving from the first into the second position, wherein the blockade element blocks the return of the locking element into its lock position and the actuator into its first position when it is in the release position,
**characterized in that**
the key held in the deposit lock is released on the other hand when the electric drive moves a carriage, which is displaceably mounted in an initial position on the locking element, wherein the carriage takes along the locking element in a first movement step of the carriage and displaces it from its lock position into its unlock position, and the carriage is displaced into its initial position again in a second movement step of the carriage, wherein a spring element arranged between the carriage and the locking element is compressed during the second movement step when a return of the locking element into its lock position is blocked by the blockade element, and that the locking element is moved into its lock position by releasing the spring element as soon as the blockade element releases the restoring of the locking element to its lock position, and wherein the carriage displaceably held on the locking element can move independently of the position of the locking element, and wherein the locking element can move independently of the position of the carriage.

2. The method according to claim 1,
**characterized in that**
the electric drive is actuated by a sensor, which detects a wirelessly transmitted signal that triggers the movement of the electric drive.

3. The method according to claim 1 or 2,
**characterized in that**
a sensor detects when the unlock position of the locking element has been reached.

4. The method according to one of the preceding claims, **characterized in that**
a sensor detects when the initial position of the carriage has been reached.

5. The method according to one of the preceding claims, **characterized in that**
the blockade element in its release position prevents the actuator from returning to its first position.

6. A deposit lock system for a borrowed item, in particular for implementing a method according to one of claims 1 to 5, having a deposit token, a deposit lock and a key, wherein the key held in the deposit lock is released upon insertion of the deposit token into the deposit lock, wherein a blockade element is displaceably mounted in the deposit lock, so that it can be displaced between a holding position, in which it secures the key in the deposit lock against removal, and a release position, in which it releases the key, wherein a locking element is displaceably mounted between a lock position, in which it holds the blockade element in its holding position, and an unlock position, in which it releases the blockade element, wherein the deposit lock has at least one actuator that can be moved from a first position into a second position purely mechanically and independently of an electric drive by inserting a deposit token into the deposit lock, wherein the actuator has a contact surface for the locking element, so that moving the actuator from its first into the second position displaces the locking element from its lock position into its unlock position, wherein the blockade element located in the release position blocks the path of the locking element in its lock position and the path of the actuator in its first position, **characterized in that**
the electric drive is connected with a carriage, which is displaceably mounted on the locking element, wherein a spring element is arranged between the carriage and the locking element, which is compressed when the carriage is in the initial position, and the blockade element blocks the path of the locking element back into the lock position.

7. The deposit lock system according to claim 6,
**characterized in that**
the locking element is a pin.

8. The deposit lock system according to one of claims 6 or 7,
**characterized in that**
the spring element is a coil spring.

9. The deposit lock system according to one of claims 6 to 8,
**characterized in that**
the electric drive is an electric motor.

10. The deposit lock system according to claim 9, **characterized in that**
the electric motor is a rotary engine, and a cam is arranged between the electric motor and the carriage, so that a rotational movement of the electric motor is converted into a linear movement of the carriage.

11. The deposit lock system according to claim 9, **characterized in that**
the electric motor is a linear motor.

## Revendications

1. Procédé opérationnel d'un système de serrure à consigne pour un objet prêté, notamment pour un chariot de transport manuellement déplaçable, dans une position de maintien, un élément de blocage de la serrure à consigne assurant contre son retrait la clé dans la serrure à consigne et libérant la clé dans une position de libération, dans une position de verrouillage, un élément de verrouillage bloquant un ajustement de l'élément de blocage de sa position de maintien dans sa position de libération et dans une position de déverrouillage, libérant l'ajustement de l'élément de blocage dans sa position de libération, par l'insertion d'un consigneur dans la serrure à consigne, un actionneur étant déplacé de manière purement mécanique et indépendamment d'un entraînement électrique d'une première position dans une deuxième position, lors du déplacement de la première dans la deuxième position, l'actionneur ajustant l'élément de verrouillage de sa position de verrouillage dans sa position de déverrouillage, un retour de l'élément de verrouillage dans sa position de verrouillage et de l'actionneur dans sa première position étant bloqué par l'élément de blocage, lorsqu'il se trouve dans la position de libération,
**caractérisé**
**en ce que** la libération de la clé maintenue dans la serrure à consigne s'effectue par ailleurs, lorsque l'entraînement électrique déplace un chariot, lequel dans une position de départ, est logé de manière coulissante sur l'élément de verrouillage, dans une première étape de déplacement du chariot, le chariot entraînant l'élément de verrouillage et l'ajustant de sa position de verrouillage dans sa position de déverrouillage et dans une deuxième étape de déplacement du chariot, le chariot étant réajusté dans sa position de départ, pendant la deuxième étape de déplacement, un élément à ressort placé entre le chariot et l'élément de verrouillage étant placé sous tension, lorsqu'un retour de l'élément de verrouillage dans sa position de verrouillage est bloqué par l'élément de blocage et **en ce que** par détente de l'élément à ressort dans sa position de verrouillage, l'élément de verrouillage est déplacé dans sa position de verrouillage, dès que l'élément de blocage libère le retour de l'élément de verrouillage dans sa position de verrouillage et le chariot maintenu de manière coulissante sur l'élément de verrouillage pouvant se déplacer indépendamment de la position de l'élément de verrouillage et l'élément de verrouillage pouvant se déplacer indépendamment de la position du chariot.

2. Procédé selon la revendication 1,
**caractérisé**
**en ce que** l'entraînement électrique est actionné par un capteur, qui détecte un signal émis sans fil, lequel déclenche la déplacement de l'entraînement électrique.

3. Procédé selon la revendication 1 ou 2,
**caractérisé**
**en ce qu'**un capteur détecte l'atteinte de la position de déverrouillage de l'élément de verrouillage.

4. Procédé selon l'une quelconque des revendications précédentes,
**caractérisé**
**en ce qu'**un capteur détecte l'atteinte de la position de départ du chariot.

5. Procédé selon l'une quelconque des revendications précédentes,
**caractérisé**
**en ce que** dans sa position de libération, l'élément de blocage empêche un retour de l'actionneur dans sa première position.

6. Système de serrure à consigne pour un objet de prêt, destiné notamment à réaliser un procédé selon l'une quelconque des revendications 1 à 5, comportant un consigneur, une serrure à consigne et une clé, une libération de la clé maintenue dans la serrure à consigne s'effectuant à condition d'une insertion du consigneur dans la serrure à consigne, un élément de blocage étant logé de manière ajustable dans la serrure à consigne, de sorte qu'il soit ajustable entre une position de maintien, dans laquelle il assure la clé dans la serrure à consigne contre son retrait et une position de libération, dans laquelle il libère la clé, un élément de verrouillage étant logé de manière ajustable entre une position de verrouillage, dans laquelle il maintient l'élément de blocage dans sa position de maintien et une position de déverrouillage, dans laquelle il libère l'élément de blocage, la serrure à consigne comportant au moins un actionneur, qui par l'insertion du consigneur dans la serrure à consigne peut être passé de manière purement mécanique et indépendamment d'un entraînement électrique d'une première position dans une deuxième position, l'actionneur comportant une surface de contact pour l'élément de verrouillage, de sorte qu'un déplacement de l'actionneur de sa première dans sa deuxième position ajuste l'élément de verrouillage de sa position de verrouillage dans sa position de déverrouillage, l'élément de blocage qui se trouve dans la position de verrouillage bloquant la course de l'élément de verrouillage dans sa position de verrouillage et la course de l'actionneur dans sa première position, **caractérisé**
**en ce que** l'entraînement électrique est connecté avec un chariot, lequel est logé de manière coulissante sur l'élément de verrouillage, entre le chariot et l'élément de verrouillage étant placé un élément à ressort, lequel se trouve sous tension, lorsque le chariot est dans la position de transport et l'élément de blocage bloque la course de l'élément de verrouillage en retour dans la position de verrouillage.

7. Système de serrure à consigne selon la revendication 6, **caractérisé**
**en ce que** l'élément de verrouillage est une tige.

8. Système de serrure à consigne selon l'une quelconque des revendications 6 ou 7,
**caractérisé**
**en ce que** l'élément à ressort est une vis hélicoïdale.

9. Système de serrure à consigne selon l'une quelconque des revendications 6 à 8,
**caractérisé**
**en ce que** l'entraînement électrique est un moteur électrique.

10. Système de serrure à consigne selon la revendication 9, **caractérisé**
**en ce que** le moteur électrique est un moteur de rotation et **en ce qu'**entre le moteur électrique et le chariot est placé un excentrique, de sorte qu'un déplacement en rotation du moteur électrique soit converti en un déplacement linéaire du chariot.

11. Système de serrure à consigne selon la revendication 9, **caractérisé**
**en ce que** le moteur électrique est un moteur linéaire.
